# EUROPÄISCHE PATENTANMELDUNG

(11) **EP 3 385 588 A1**
(43) Veröffentlichungstag der Anmeldung: **10.10.2018**
(21) Anmeldenummer: 17165434.6
(22) Anmeldetag: 07.04.2017
(51) Int. Cl.: F16L 5/04, F16L 5/10

(54) **BRANDSCHUTZELEMENT**

(71) Anmelder: HILTI Aktiengesellschaft, 9494 Schaan (LI)
(72) Erfinder: Simon, Sebastian, 86807 Buchloe Lindenberg (DE)
(74) Vertreter: Hilti Aktiengesellschaft Corporate Intellectual Property

(57) **Zusammenfassung**

Ein Brandschutzelement (10) zum Abschotten von durch Wände (18) oder Decken hindurchführenden Öffnungen (32), insbesondere von Leitungsdurchgängen, umfasst eine dauerplastische Knetmasse (12) für Brandschutzanwendungen und eine Folie (14), die die Knetmasse (12) zumindest abschnittsweise bedeckt. Die Folie (14) ist derart ausgebildet, dass ein Aushärten der Knetmasse (12) im Wesentlichen verhindert ist.

## Beschreibung

Die Erfindung betrifft ein Brandschutzelement zum Abschotten von durch Wände oder Decken hindurchführenden Öffnungen, insbesondere von Leitungsdurchgängen, mit einer dauerplastischen Knetmasse für Brandschutzanwendungen und einer Folie.

Brandschutzelemente, die Leitungsdurchgänge mit nicht feuerfesten Rohren oder Kabeln in Decken oder Wänden im Brandfall schließen können, um eine Ausbreitung von Feuer und Rauch in Gebäuden zu verhindern, sind in verschiedensten Ausgestaltungen bekannt.

Dauerplastische Knetmassen für Brandschutzanwendungen sind ebenfalls bekannt. In dieser Hinsicht wird Bezug genommen auf die Offenlegungsschrift DE 103 35 808 A1, die eine solche Knetmasse offenbart. Der Inhalt der DE 103 35 808 A1 wird hiermit in diese Anmeldung aufgenommen und alle in dieser Offenlegungsschrift enthaltenen Informationen gelten in vollem Umfang als Teil dieser Beschreibung, auch wenn sie im Folgenden nicht extra wiedergegeben werden.

Aus der US 2016/0178058 A1 ist ferner ein Brandschutzelement mit einer dauerplastischen Knetmasse für Brandschutzanwendungen und einer Folie bekannt. Die Folie bedeckt einen Teil der Knetmasse und erhöht den Komfort bei der Montage, beispielsweise indem keine Handschuhe getragen werden müssen und das Risiko reduziert ist, die Umgebung zu verschmutzen.

Nachteilig bei den bekannten Brandschutzelementen mit einer dauerplastischen Knetmasse ist, dass die Knetmasse mit der Zeit ihre Weichmacher verliert und spröde wird. Hierdurch lässt sich die Knetmasse mit zunehmendem Alter schlechter verformen, beispielsweise wenn die Kabelbelegung des Brandschutzelements verändert werden muss. Ferner kann dies zu einer Rissbildung oder einem Abbröckeln der Knetmasse führen, wodurch die Brandschutzeigenschaften des Brandschutzelements verringert werden.

Aufgabe der Erfindung ist es, ein Brandschutzelement mit einer dauerplastischen Knetmasse für Brandschutzanwendungen bereitzustellen, die ihre plastischen Eigenschaften über die Zeit nicht verliert und einfach zu verarbeiten ist.

Zur Lösung der Aufgabe ist ein Brandschutzelement zum Abschotten von durch Wände oder Decken hindurchführenden Öffnungen, insbesondere von Leitungsdurchgängen, mit einer dauerplastischen Knetmasse für Brandschutzanwendungen und einer Folie vorgesehen, die die Knetmasse zumindest abschnittsweise bedeckt. Die Folie ist derart ausgebildet, dass ein Aushärten der Knetmasse im Wesentlichen verhindert ist. Im Sinne der Erfindung gilt dies als erfüllt, wenn die plastischen Eigenschaften sich nicht wesentlich über einen Zeitraum ändern, der der Nutzungsdauer des Brandschutzelements entspricht. Insbesondere beträgt der Zeitraum mehrere Jahrzehnte. Indem die Folie das Aushärten der Knetmasse verhindert, behält die Knetmasse ihre plastischen Eigenschaften über viele Jahre hinweg bei und kann bei Bedarf ohne Rissbildung verformt werden. Somit kann das Brandschutzelement auch noch nach vielen Jahren mit neuen Leitungen bestückt oder an unterschiedliche Öffnungsquerschnitte angepasst werden, ohne dass hierbei die Brandschutzeigenschaften des Brandschutzelements beeinträchtigt werden.

Gemäß einer vorteilhaften Ausführungsform weist die Knetmasse eine oder mehrere flüssige Komponenten auf, die die gute Verformbarkeit der Knetmasse gewährleisten. Die Folie ist undurchlässig für diese flüssigen Komponenten bzw. Weichmacher. Somit ist die Folie ausgebildet, die flüssigen Komponenten und/oder Weichmacher in der Knetmasse zurückzuhalten und so das Aushärten der Knetmasse zu verhindern. Insbesondere liegt die Folie dicht an der Knetmasse an, sodass sich keine flüssigen Komponenten bzw. Weichmacher zwischen der Folie und der Knetmasse ansammeln können.

Vorzugsweise umschließt die Folie die Knetmasse vollständig und dicht. Hierdurch ist die Knetmasse durch die Folie vollständig von der Umgebung getrennt und es gibt keine Öffnungen bzw. Lecks, durch die Teile bzw. Komponenten der Knetmasse mit der Umgebung in direkten Kontakt treten können. Das bedeutet, dass die Knetmasse vollständig durch die Folie abgeschirmt wird. Auf diese Weise ist verhindert, dass die Knetmasse beispielsweise ihre Weichmacher verliert und mit der Umgebung, insbesondere der Umgebungsluft, reagiert. Somit härtet die Knetmasse nicht aus und behält ihre plastischen Eigenschaften.

Es ist von Vorteil, wenn die Folie flexibel und reißfest ist, wodurch das Brandschutzelement einfach zu verarbeiten ist. Durch die Flexibilität der Folie wird der Widerstand nicht wesentlich erhöht, der zum Verformen des Brandschutzelements erforderlich ist. Ferner ist durch die hohe Reißfestigkeit der Folie sichergestellt, dass sich bei der Montage keine Risse oder Löcher bilden und die Folie dicht bleibt.

In einer bevorzugten Ausführungsform hat die Folie eine maximale Wandstärke von 100 µm. Auf diese Weise ist die Folie besonders dünn und damit leicht verformbar und materialeffizient.

Bevorzugt handelt es sich bei der Folie um eine Adhäsionsfolie, die besonders gut an der Knetmasse haftet und damit dicht an dieser anliegt, insbesondere auch bei Verformung des Brandschutzelements. Ferner kann die Adhäsionsfolie genutzt werden, um das Brandschutzelement an Wänden bzw. Decken, insbesondere mit einer glatten Oberfläche, zu befestigen und/oder um ein Verrutschen von durch das Brandschutzelement geführten Leitungen zu reduzieren.

Das Brandschutzelement kann plattenförmig sein, wodurch besonders wenig Material erforderlich ist, um eine Öffnung bestimmter Größe abzudecken. Somit ist das Brandschutzelement besonders leicht und raumsparend sowie kostengünstig herstellbar.

Gemäß einer weiteren vorteilhaften Ausführungsform hat das Brandschutzelement eine axiale Durchführung, die für die Aufnahme von Leitungen vorgesehen ist und vorzugsweise zentral im Brandschutzelement angeordnet ist. Ferner weist das Brandschutzelement eine axiale Ausnehmung auf, die sich von einer Außenseite des Brandschutzelements, insbesondere in radialer Richtung, zur Durchführung erstreckt. Somit lässt sich eine Leitung seitlich, das heißt radial zur Erstreckung der Leitung, in die axiale Durchführung des Brandschutzelements einführen, ohne dass hierzu das Brandschutzelement beschädigt, beispielsweise aufgeschnitten, werden muss. Ebenso lässt sich das Brandschutzelement seitlich auf eine Leitung aufstecken. Ferner können auf diese Weise auch mehrere, insbesondere parallel verlaufende, Leitungen in die axiale Durchführung des Brandschutzelements eingebracht werden.

Vorzugsweise ist das Brandschutzelement ein, insbesondere flacher, C-förmiger Ring. Dabei sind die Enden des Rings derart ausgebildet, dass sie den Ring dicht schließen, wenn sie miteinander in Kontakt gebracht werden. Auf diese Weise lässt sich der offene, C-förmige Ring zu einem vollständigen Ring schließen, der vergleichbar gute Brandschutzeigenschaften aufweist wie ein ringförmiges Brandschutzelement. Jedoch hat das C-förmige Brandschutzelement den Vorteil, dass zwischen den Enden Leitungen in die zentrale Durchführung eingelegt werden können. Die Enden schließen durch die Adhäsion der Folie ohne weitere Befestigungsmittel dicht. Alternativ oder zusätzlich können aber Befestigungsmittel wie Klebe- oder Klettstreifen an den Enden vorgesehen sein, um eine sichere Befestigung der Enden aneinander zu gewährleisten.

Weitere Vorteile und Merkmale ergeben sich aus der nachfolgenden Beschreibung in Verbindung mit den beigefügten Zeichnungen. In diesen zeigen:
- Figur 1 in einer Draufsicht ein erfindungsgemäßes Brandschutzelement in offener Position, und
- Figur 2 in einer perspektivischen Ansicht das Brandschutzelement aus Figur 1 in eingebauter Position.

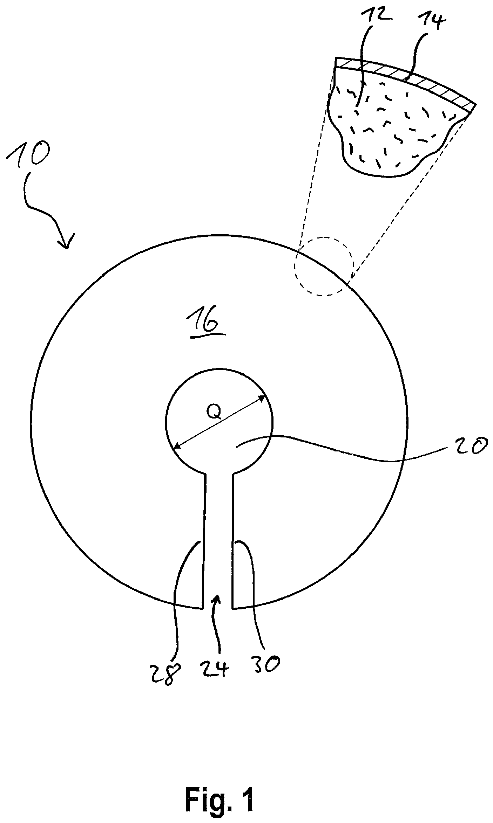

In Figur 1 ist ein Brandschutzelement 10 gezeigt, das zum Abschotten von durch Wände oder Decken hindurchführenden Öffnungen vorgesehen ist und durch eine dauerplastische Knetmasse 12 für Brandschutzanwendungen und eine Folie 14 gebildet ist.

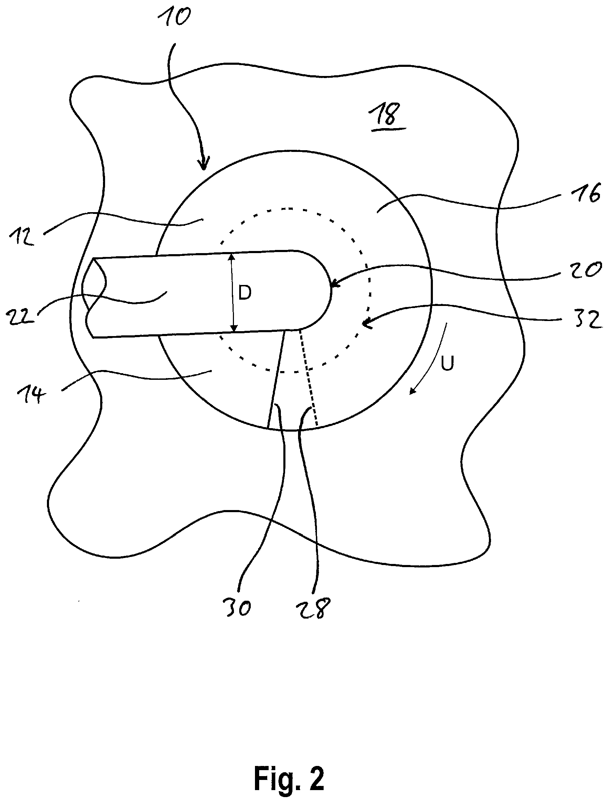

Die Knetmasse 12 weist flüssige Komponenten und/oder Weichmacher auf, die gewährleisten, dass die Knetmasse 12 dauerplastisch bleibt und somit das Brandschutzelement 10 zur Montage bzw. zum Einsetzen oder Herausnehmen von Leitungen 22 (siehe Figur 2) leicht verformbar bleibt.

Die Folie 14 ist dazu ausgebildet, die flüssigen Komponenten und/oder Weichmacher der Knetmasse 12 zurückzuhalten, das heißt, die Folie 14 ist für diese Stoffe vorzugsweise vollständig undurchlässig.

Die Knetmasse 12 ist von der Folie 14 vollständig und dicht umgeben, sodass die Knetmasse 12 zu allen Seiten durch die Folie 14 von der Umgebung getrennt ist. Insbesondere hat die Knetmasse 12 dabei keinen Kontakt zur Umgebungsluft.

Gemäß einer alternativen Ausführungsform kann die Folie 14 die Knetmasse 12 lediglich teilweise bedecken, vorzugsweise auf der Seite 16 des Brandschutzelements 10, die im eingebauten Zustand von der Wand 18 oder Decke weg weist (siehe Figur 2). Auf diese Weise ist die Knetmasse 12 zwischen der Wand und der Folie 14 angeordnet, wodurch der Großteil ihrer freiliegenden Außenfläche keinen direkten Kontakt zur Umgebung bzw. Umgebungsluft hat.

Die Folie 14 ist flexibel und reißfest, das heißt widerstandsfähig gegen mechanische Beschädigungen.

Die Wandstärke der Folie 14 beträgt 10 µm. Alternativ kann die Folie auch dünner oder dicker sein. Vorzugsweise ist die Wandstärke nicht größer als 100 µm.

Die Folie 14 kann ferner undurchlässig für elektromagnetische Strahlung bestimmter Wellenlängen oder eines bestimmten Spektrums sein, beispielsweise für sichtbares Licht, UV-Strahlung und/oder Wärmestrahlung. Auf diese Weise kann eine Wechselwirkung der Knetmasse 12 mit elektromagnetischer Strahlung unterbunden werden, die sonst zur Aushärtung der Knetmasse 12 beitrüge.

In der gezeigten, bevorzugten Ausführungsform ist die Folie 14 eine Adhäsionsfolie und liegt damit besonders dicht an Oberflächen an bzw. haftet an diesen. Alternativ kann die Folie 14 keine oder lediglich abschnittsweise Adhäsionseigenschaften aufweisen.

Das Brandschutzelement 10 hat die Form einer kreisförmigen Scheibe. Alternativ kann das Brandschutzelement 10 verschiedene weitere Formen aufweisen. Eine plattenförmige Gestalt ist jedoch vorteilhaft.

In der Mitte weist das Brandschutzelement 10 eine axiale Durchführung 20 in Form eines Lochs auf, die dafür vorgesehen ist, eine oder mehrere Leitungen 22 aufzunehmen.

Von der Durchführung 20 erstreckt sich eine axiale Ausnehmung 24 in radialer Richtung bis zur radialen Außenseite 26 des Brandschutzelements 10. Die Ausnehmung 24 durchtrennt das Brandschutzelement 10 in diesem Abschnitt in axialer Richtung vollständig, wodurch das Brandschutzelement 10 die Form eines flachen C-förmigen Rings mit einem ersten Ende 28 und einem gegenüberliegenden zweiten Ende 30 erhält.

Um mit dem Brandschutzelement 10 eine Öffnung 32 in einer Wand 18 abzuschotten, wird das Brandschutzelement 10 auf die Leitung 22 aufgesteckt, die sich durch die Öffnung 32 erstreckt (siehe Figur 2). Hierzu kann das Brandschutzelement 10 in radialer Richtung auf die Leitung 22 geschoben werden, wobei die Leitung 22 durch die Ausnehmung 24 zur Durchführung 20 geleitet wird.

Anschließend werden die beiden Enden 28, 30 des Brandschutzelements 10 mit einander in Kontakt gebracht, um das Brandschutzelement 10 zu schließen. Vorzugsweise liegt dabei in axialer Richtung ein Ende 28, 30 über dem anderen Ende 28, 30, um die Kontaktfläche zu vergrößern und somit eine besonders hohe Dichtheit zu gewährleisten. In Figur 2 zeigt die strichlinierte Gerade das erste Ende 28, das zwischen der Wand 18 und dem zweiten Ende 30 angeordnet ist.

In dem Fall, dass die Folie 14 eine Adhäsionsfolie ist, können die Adhäsionseigenschaften der Folie 14 genutzt werden, um die Enden 28, 30 aneinander zu befestigen. Somit sind keine weiteren Befestigungsmittel erforderlich und die Montage ist vereinfacht.

Alternativ oder zusätzlich können Befestigungsmittel vorgesehen sein, um zu gewährleisten, dass das Brandschutzelement 10 sicher verschlossen werden kann. Beispielsweise können hierzu Klebesteifen oder Klettverschlüsse vorgesehen sein, die den Vorteil haben, dass die Enden 28, 30 stufenlos miteinander in Kontakt gebracht werden können. Das heißt, es sind keine festen Befestigungspositionen durch die Anordnung der Befestigungsmittel vorgegeben. Ferner können als Befestigungsmittel Schellen oder Rahmen vorgesehen sein.

Wenn das Brandschutzelement 10 geschlossen wird, indem die Enden 28, 29 mit einander in Kontakt gebracht werden, verringert sich der Querschnitt Q der Durchführung 20.

Je nachdem wie groß die Ausnehmung 24 ist, bevor man die Enden 28, 30 in Kontakt bringt, und/oder wie weit man die Enden 28, 30 in Umfangsrichtung U übereinander anordnet, verringert sich der Querschnitt Q der Durchführung 20. Somit kann der Querschnitt Q der Durchführung 20 an den Durchmesser D der Leitung 22 angepasst werden, um sicherzustellen, dass das Brandschutzelement 10 dicht an der Leitung 22 anliegt und die Öffnung 32 rauchdicht abschottet.

In einem alternativen Montageverfahren kann die Leitung 22 in axialer Richtung durch die Durchführung 20 im Brandschutzelement 10 und anschließend die Öffnung 32 in der Wand 18 geschoben werden.

Dies ist insbesondere dann erforderlich, wenn das Brandschutzelement 10 keine Ausnehmung 24 aufweist. In diesem Fall ist es vorteilhaft, wenn der Querschnitt Q der Durchführung 20 kleiner als der Durchmesser D der Leitung 22 ist, sodass das Brandschutzelement 10 dicht an der Leitung 22 anliegt und die Öffnung 32 rauchdicht verschließt.

Mit dem Brandschutzelement 10 lässt sich auf diese Weise auch eine Öffnung 32 abschotten, durch die ein Bündel von mehreren Leitungen 22 anstelle einer einzelnen Leitung 22 verläuft.

Dadurch, dass die dauerplastische Knetmasse 12 von der Folie 14 bedeckt ist, verbleiben die flüssigen Komponenten und/oder Weichmacher in der Knetmasse 12. Somit wird das Aushärten der Knetmasse 12 bedeutend verlangsamt bzw. vollständig unterdrückt. Auf diese Weise behält das Brandschutzelement 10 seine plastischen Eigenschaften über sehr lange Zeit und kann auch noch nach Jahren einfach verformt bzw. verarbeitet werden.

## Patentansprüche

1. Brandschutzelement (10) zum Abschotten von durch Wände (18) oder Decken hindurchführenden Öffnungen (32), insbesondere von Leitungsdurchgängen, mit einer dauerplastischen Knetmasse (12) für Brandschutzanwendungen und einer Folie (14), die die Knetmasse (12) zumindest abschnittsweise bedeckt, **dadurch gekennzeichnet, dass** die Folie (14) ausgebildet ist, ein Aushärten der Knetmasse (12) im Wesentlichen zu verhindern.

2. Brandschutzelement nach Anspruch 1, **dadurch gekennzeichnet, dass** die Knetmasse (12) flüssige Komponenten aufweist und die Folie (14) undurchlässig für zumindest einen Teil, oder die gesamten flüssigen Komponenten ist.

3. Brandschutzelement nach einem der vorhergehenden Ansprüche, **dadurch gekennzeichnet, dass** die Folie (14) die Knetmasse (12) vollständig und dicht umschließt.

4. Brandschutzelement nach einem der vorhergehenden Ansprüche, **dadurch gekennzeichnet, dass** die Folie (14) flexibel und reißfest ist.

5. Brandschutzelement nach einem der vorhergehenden Ansprüche, **dadurch gekennzeichnet, dass** die Folie (14) eine Wandstärke von maximal 100 µm hat.

6. Brandschutzelement nach einem der vorhergehenden Ansprüche, **dadurch gekennzeichnet, dass** die Folie (14) eine Adhäsionsfolie ist.

7. Brandschutzelement nach einem der vorhergehenden Ansprüche, **dadurch gekennzeichnet, dass** das Brandschutzelement (10) plattenförmig ist.

8. Brandschutzelement nach einem der vorhergehenden Ansprüche, **dadurch gekennzeichnet, dass** das Brandschutzelement (10) eine, vorzugsweise zentrale, axiale Durchführung (20) hat, die für die Aufnahme von Leitungen (22) vorgesehen ist, und eine axiale Ausnehmung (24) aufweist, die sich von einer Außenseite (26) des Brandschutzelements (10), insbesondere in radialer Richtung, zur Durchführung (20) erstreckt.

9. Brandschutzelement nach einem der vorhergehenden Ansprüche, **dadurch gekennzeichnet, dass** das Brandschutzelement (10) ein, insbesondere flacher, C-förmiger Ring ist, wobei die Enden (28, 30) des Rings derart ausgebildet sind, dass sie den Ring dicht schließen, wenn sie miteinander in Kontakt gebracht werden.
